# EUROPEAN PATENT APPLICATION

(11) **EP 3 232 244 A1**
(43) Date of publication of application: **18.10.2017**
(21) Application number: 16164765.6
(22) Date of filing: 11.04.2016
(51) Int. Cl.: G02B 21/00, B82Y 20/00, G01N 21/552, G02B 5/00

(54) **MICROSCOPIC IMAGING SYSTEM AND METHOD OF FORMING A MICROSCOPIC IMAGE OF AN OBJECT**

(71) Applicant: Nederlandse Organisatie voor toegepast- natuurwetenschappelijk onderzoek TNO, 2595 DA 's-Gravenhage (NL)
(72) Inventor: Bernal Arango, Felipe Andres, 2595 DA 's-Gravenhage (NL)
(74) Representative: V.O.

(57) **Abstract**

A microscopic image of an object is formed by illuminating the object with light through an array of nano antenna elements and imaging a combination of the object and the array in a detection plane wherein substantially a Fourier image of the combination is formed. Image information is retrieved from the detection plane for a plurality of scanning points of the object relative to the antenna array The microscopic image of the object is formed from the retrieved image information as a function of scanning point, for example based on differences between intensities in different quadrants in the Fourier plane.

## Description

### Field of the invention

The invention relates to optical microscopy using nano antennas.

### Background

Imaging by means of conventional optical microscopy is limited to what can be detected from the electromagnetic field that radiates from an object. This limits the bandwidth of spatial frequency components of object surface features that can be optically detected. With a given pupil size, spatial frequency components can be detected only if their spatial frequencies k have a size |k| are below a lower limit proportional to 1/lamdba, the inverse wavelength of the light used for imaging. The detectable strength of the part of the near field that does not result in radiation rapidly decreases with distance, which acts as a filter that reduces detectability of this part with increasing distance.

A known optical detection method that enables detection of such features is near field scanning optical microscopy (NSOM). NSOM makes it possible to obtain higher resolution microscopic images. NSOM involves detection of the intensity of light captured by a small aperture at the end of an optical fiber, close to the object surface, while the position of the aperture is scanned along the surface of the object. The captured light is fed to a detector using the optical fiber and the light intensity detected by the detector as a function of the position of the aperture is used to form an image of the object. Thus for example small particles on the surface may be detected.

NSOM has the disadvantage that time consuming scans are needed. In theory, the scan could be speeded up by using a plurality of aperture, fiber, detector combinations in parallel. But the minimum diameter of optical fibers (e.g. 100 micrometer) limits the reduction of scanning time that can be achieved.

Optical nano-antennas are described in an article titled "Plasmonic Antennas Hybridized with Dielectric Waveguides" by Felipe Bernal Arango et al in ACS-nano 2012. This article describes light of waveguide modes optical nano-antennas, and conversely how the waveguide affects antenna resonance. The antennas are fed via the waveguide and the resulting antenna radiation patterns are measured using a microscope to make a Fourier plane image that represents the antenna direction pattern. The effect of both individual antennas and multi-element antennas is studied. In ACS Photonics, 2014, 1 (5), pp 444-453, Felipe Bernal Arango et al the superpolarizability of plasmonic antennas is described.

A method determined dipole and quadrupole polarizability is described in an article titled "Underpinning hybridization intuition for complex antennas by magnetoelectric quadrupolar polarizability retrieval"by Bernal Arango in ACS Photonics, 2014, 1 (5), pp 444-453. The article shows how a model allows interpretation of near field excitation data taken on plasmon antennas deposited on a high-index substrate.

### Summary

It is an object to provide for high resolution microscopy.

A method of forming a microscopic optical image of an object according to claim 1. In this way high spatial frequency content of the electromagnetic field scattered by the object is mode converted into far-field radiation, enabling the propagation of high-resolution details up the distance at which a detector is placed to retrieve the image information.

Preferably, the illumination is produced by an optical laser light source or other mono chromatic light source. Antenna elements are bodies of electrically conductive material. Nano antenna elements have bodies of nanometer size, i.e. a size in all directions substantially less than the wavelength of the optical light use for illumination. The antenna elements may be placed at a distance from the object in a distance zone where the near-field, evanescent components of radiation from the object are strong enough to probe the evanescent components. The antenna elements may be located in a plane and the object may have a planar surface shape, with the plane of the object surface parallel to the plane of the array of antenna elements. The distance between the planes may taken as small as possible while allowing scanning, at a nano distance of less than a wavelength of the light with which the object is illuminated, and preferably less than a quarter wavelength, e.g. twenty nanometer, or less than a hundred nanometer.

An array of optical antenna elements on an antenna array plate that comprises an optically transparent substrate may be used for example. The array is preferably a two-dimensional array. The antenna elements may be located on or in the substrate, on a surface of the antenna array plate that faces the object. In an embodiment, the antenna elements are located at spatially periodically repeating locations along the surface. The period lengths is preferably less than a wavelength of the light, and more preferably less than a quarter wavelength. A size of the individual antenna elements is smaller than the period length. In an embodiment, all antenna elements in the array have a same size and shape.

A Fourier image of the light scattered by the combination of the object may be formed using a microscope objective, which comprises a lens. A confocal microscope may be used for example. The antenna array is located between the object and the objective. As is known per se, a Fourier plane is a plane wherein components of the captured light with different wave front directions in a pupil plane of the objective the antenna array plate are resolved at different points in the plane. The plane of the array of antenna elements may be considered a pupil plane. Substantially a Fourier image of the combination of the object and the array is formed in a detection plane that is substantially a Fourier plane. As used herein an image is substantially a Fourier image when components of the captured light with different wave front directions at the antenna array plate are at least partly resolved at different points in the detector plane, without excluding a point spread that results in overlap between the components.

Image information is retrieved using at least one detector in the detection plane. Scanning may be performed by moving the array of antenna elements and the object relative to each other in parallel with the plane wherein the antenna elements are located. For example, the object may be moved while the array of antenna elements is kept at a fixed position relative to the objective. Alternatively, the position of array of antenna elements may be scanned while the object is kept fixed. In other embodiments both may be moved, and/or the objective may be moved.

The microscopic optical image of the object may contain image values as a function of position in the image that are derived from output signal values of the detector at respective positions in an array of scanning points and optionally output signal values of the detector at relative positions defined relative to these respective positions.

In an embodiment, the retrieved image information is a difference between detected light intensity in respective different quadrants in the detection plane, e.g. in a plane that is substantially a Fourier plane. This reduces and preferably eliminates the contribution of object independent effects and uniform object surface properties on the retrieved image information. For the imaging it is importation that the effect of object surface features that break the uniformity of the object surface is not too small compared to the effect of the contribution of object independent effects and uniform object surface properties. Taking the difference makes the latter smaller relative to the former.

In a Fourier plane, a central position may be distinguished where wave fronts with a wave front direction that is perpendicular to the optical axis of the objective are mapped. Four quadrants may be distinguished by means of a pair of virtual lines through these positions, e.g. lines parallel and perpendicular to the polarization direction of the light by which the antenna elements are illuminated. The light intensity that is detected in the quadrants may be an average light intensity in the quadrant, a peak intensity, an intensity at position with a predetermined offset to the central position or an average light intensity in a region with a predetermined offset to the central position.

In an embodiment the retrieved image information is the difference between detected light intensity in two diagonally opposite quadrants. In this way a maximum sensitivity to non-uniform object surface properties is obtained. Alternatively, difference between detected light intensity in two adjacent quadrants may be used, or a difference between detected light intensity in pairs of quadrants.

In an embodiment forming the image comprises integrating the difference in a scanning direction. This may be used to turn imaging of the spatial derivative of object surface properties, wherein a particles on the object surface results in positive and negative peaks as a function of scan position, into an image with substantially only peaks of one sign.

In an embodiment the nano-antenna elements are dipole antenna elements, i.e. elements which produce a field with the far field spatial position dependence of a dipole field. The dipole field is characterized by a dipole direction. Dipole antenna elements may be linear shaped bodies of electrically conductive material, characterized by a length and width in a first and second direction respectively . The length is larger than the width and the first direction corresponds to the dipole direction. Such dipole antenna elements provide for efficient imaging. In an embodiment, each antenna element has a plasmon resonance at the wavelength of the illumination, or a plasmon resonance peak of the antenna elements contains the wavelength. This increases the effect of the antenna elements.

In an embodiment the object is illuminated through the array of nano antenna elements with a polarized incident beam having a polarization direction perpendicularly aligned with respect to the polarization direction. Thus, the E-field component of the illumination is perpendicular to the dipole antenna elements, e.g. perpendicular to the longest direction of its linear body.

In an embodiment a plurality of different arrays of nano antenna elements combined onto a same surface and a plurality of parallel sensors are used. The sensors may be used to detect light from the different arrays. Thus parallel measurements may be performed.

In an embodiment a microscopic imaging system according to claim 12 is provided. According to another aspect an microscopic imaging system is provided that comprises
- an object carrier;
- an array of antenna elements located in an antenna array plane, the object having a plane shaped surface parallel to the antenna array plane;
- a scanning mechanism configured to scan the object and/or the array in a direction parallel to the plane of the array, over a range of different relative positions with respect to each other;
- a light source configured to illuminate an object on the object carrier through the array antenna elements, a size of individual antenna elements in the array being smaller than half a wavelength of the light form the light source, the antenna elements being located at less than half the wavelength from a surface of the object;
- an objective configured to form substantially a Fourier image of a combination of the object and the array in a detector plane;
- a detector configured to detect light intensity in the detector plane;
- a signal processing system configured to form an mage of the object from image information derived from the detected light intensity as a function of said relative positions.

In an embodiment the detector comprises respective detection elements, such as light detector diodes, or pixels or groups of pixels of an image sensor in positions in the detector plane, and the signal processing system is configured to obtain the retrieved image information from a difference between light intensities detected by the respective detection elements. Preferably the locations of the detection elements are mirror images of each other under geometric mirror imaging with respect to a symmetry line through the central position in the Fourier plane.

In an embodiment the light source is polarized light source and the microscopic imaging system comprises a polarizing element, such as a polarizing beam splitter, or a polarization filter in the detection light path from the array of antenna elements to the detector plane, the polarizing element selectively passing light with a polarization direction perpendicular to that of the light source. The symmetry lines with respect to which the position symmetry of the detectors is defined my be selected in parallel with the polarization direction of the light source or the polarization direction of the polarizing element.

In the embodiments the antenna elements are dipole antenna elements. In a further embodiment the light source is polarized light source, the antenna elements dipole direction of the antenna elements being perpendicular to the electric field direction of the polarized light from the light source.

### Brief description of the drawing

The and other objects and advantageous aspects will become apparent from a description of exemplary embodiments with reference to the following figures.
Figure 1a-c schematically show microscopic imaging systems using an antenna array
Figure 2a, b illustrate an antenna array plate
Figure 3 illustrates a detector plane
Figure 4 illustrate an embodiment with distance modulation
Figure 5 shows images

### Detailed description of exemplary embodiments

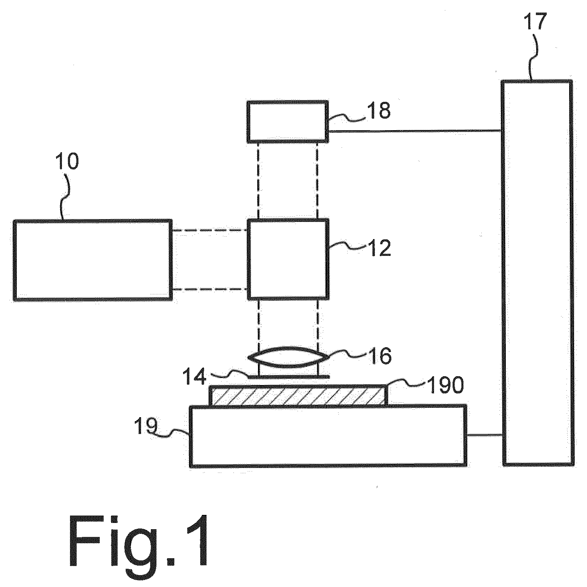

Figure 1a schematically shows a microscopic imaging system comprising a light source 10, a beam splitter 12, an antenna array plate 14, an objective 16 and a detector 18. Light source 10, beam splitter 12, antenna array plate 14, and objective form a microscope. By way of illustration, objective 16 is shown as a single lens, but it should be appreciated that a complex objective comprising a plurality of lenses and/or optical elements may be used. In the illustrated embodiment, the microscope may also comprise a control computer 17 and a scanning mechanism 19 to scan an object 190 (symbolically indicated) relative to antenna array plate 14 in directions transverse to the optical axis of objective 16. The scanning mechanism acts as a movable object carrier. Scanning mechanism 19 may be a piezo driven scanning mechanism 19. Control computer 17 may be coupled to a control input of scanning mechanism 19 and an output of detector 18. Light source 10 is preferably a laser. A laser with a wavelength of 800 nanometer may be used for example. By way of example, objective 16 is shown as a single objective lens.

The microscope defines an illumination light path and a detection light path. Beam splitter 12 is positioned to direct a beam of light from light source 10 to objective 16 and to direct light from objective 16 to detector 18.The illumination light path runs from light source 10 successively via beam splitter 12 and objective 16 to antenna array plate 14. From antenna array plate 14 the light illuminates object 190. The detection light path runs from antenna array plate 14 successively via objective 16 and beam splitter 12 to detector 18. Light source 10 may be optically configured to provide for illumination of a spot on antenna array plate, or to provide for uniform illumination via objective 16. In an embodiment, beam splitter 12 is a polarization selective beam splitter 12, which selectively passes light components with mutually orthogonal polarization via the illumination light path and the detection light path.

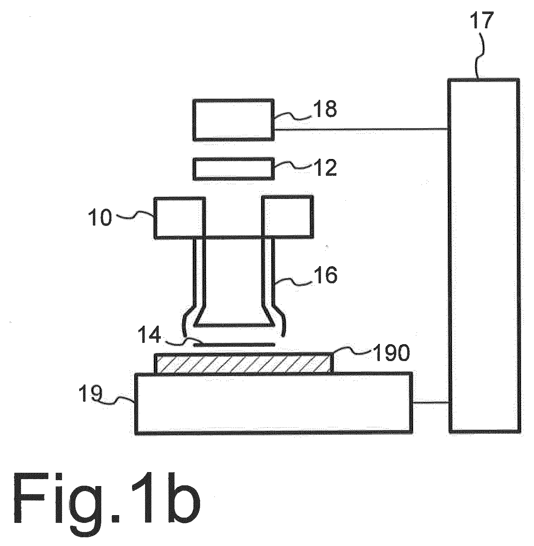

Figure 1b shows an embodiment with a different microscope embodiment. Herein objective 16 is a dark field objective. As is known per se, a dark field objective provides for the supply of illumination in parallel with the light detection path, bypassing the lens or lenses of the objective in the detection light path. At the object end of the dark field objective, the illumination is directed at a grazing angle to an object position on the optical axis of the objective. In contrast to conventional dark field objectives, which supply the illumination from a ring around the optical axis, the dark field objective of the embodiment uses a pair of isolated apertures at positions where ring is conventionally present. The isolated apertures are at diametrically opposite position relative to the optical axis. Illumination is supplied only via the isolated apertures. This facilitates use of a single polarization. Instead of two apertures, one aperture may be used.

In this embodiment the beam splitter has been omitted. Light source 10 is coupled to dark field objective 16. Dark field objective 18 provides for illumination of antenna array plate 14 and object 190 under grazing incidence, or at least under an angle that does not lead to direct reflection of the illuminating light into the detection light path. Light source 10 may be a polarized light source, e.g. containing an optional polarizer (not separately shown) to supply polarized through the illumination light path. An optional polarizer 120 is provided between dark field objective and detector 18, in the detection light path.

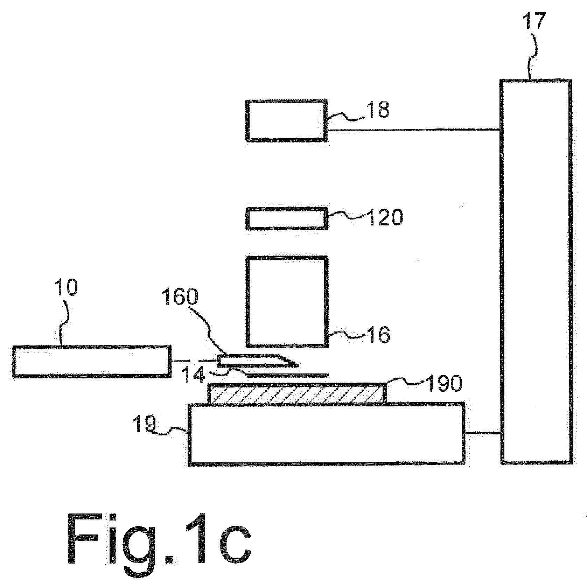

Figure 1c shows an embodiment wherein a light guide 160 is provided between objective 16 and object 190. Light source 10 is coupled to light guide 160. In this embodiment beam splitter 12 has been omitted. Light source 10 for illumination of antenna array plate 14 and object 190 under grazing incidence, or at least under an angle that does not lead to direct reflection of the illuminating light into the detection light path. Light source 10 may be a polarized light source, e.g. containing an optional polarizer (not separately shown) to supply polarized through the illumination light path. An optional polarizer 120 is provided between objective 16 and detector 18, in the detection light path.

### The antenna element array

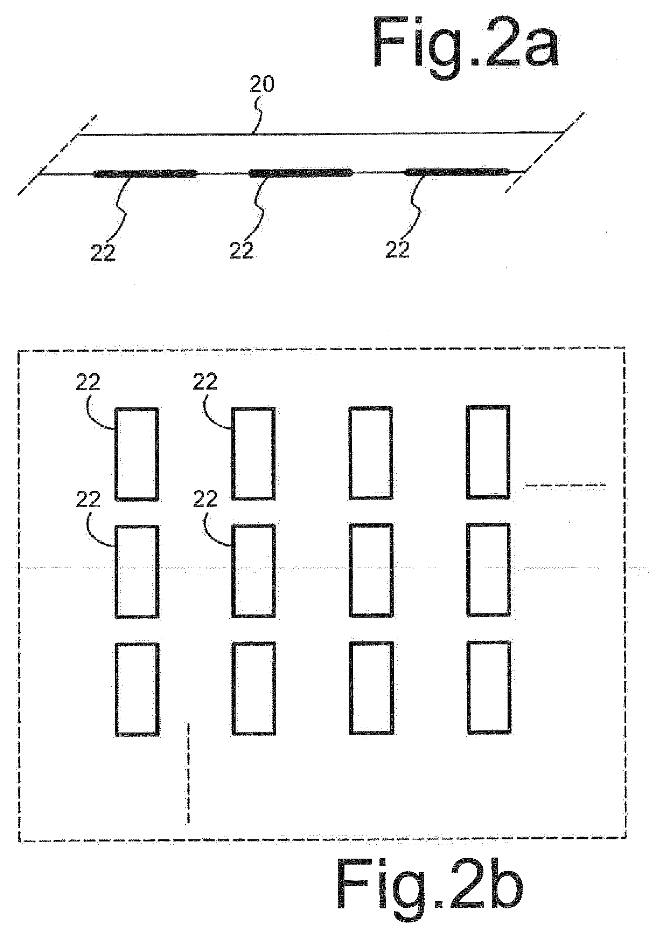

Figure 2a, b illustrate an embodiment of antenna array plate 14. Figure 2a shows a side view of antenna array plate 14. Antenna array plate 14 comprises an optically transparent substrate 20, and elongated islands 22 of electrically conductive material on or in a surface of substrate 20. By way of example only part of substrate 20 and islands 22 are shown. Islands 22 form antenna elements in an array of antenna elements.

Figure 2b shows a top view of antenna array plate 14. Elongated rectangular islands 22 may be used, are arranged in a two-dimensionally periodic array of antenna elements formed by islands 22. By way of example only part of the islands 22 are shown. In practice the array may contain many more islands 22, for example 10x10 islands 22.

In an embodiment, antenna array plate 14 may be partly covered with a light blocking layer (not shown), with an opening through which light is passed and wherein the array of islands 22 is located. In this case, the opening defines a window through which the object is lighted. Preferably, the window has a diameter larger than a wavelength of the light outside antenna array plate 14 and more preferably at least two wavelengths. Moreover, the window preferably leaves room for lighting a plurality of island 22 at the same time (e.g. at least five and more preferably at least ten in both directions). In another embodiment, such a window may be provided by means of a separate plate on top of antenna array plate 14. Lighting the object only in a window area may also be realized by using a light source 10 that is configured to light antenna array plate 14 only in a light spot area that covers only part of a larger array of islands 22.

Although figures 2a, b show an exemplary embodiment with rectangular islands 22, it should be noted that alternatively antenna elements of other shapes may be used. In other embodiments differently shaped islands may be used as antenna elements, such as square shaped islands, polygonal islands with n corners, where n does not equal four, circular islands, elliptically shaped islands, circular or elliptical ring shaped islands (with a whole in the middle), islands with a shape of crossing rectangles etc.

In an embodiment antenna array plate 14 has antenna array with a single two-dimensional periodicity. However, in another embodiment antenna array plate may carry a plurality of antenna arrays with mutually different unit cells, or an array with unit cells of variable size. This may be used to obtain measurements for different unit cell size.

The size of islands 22 is of the size of or smaller than a (lowest) wavelength of the incident light on antenna array plate 14 from light from light source 10, preferably smaller than half and more preferably smaller than a quarter of this wavelength. With a wavelength between 700-800 nanometer, the length of islands 22 along their longest direction may be 100 nanometer for example and their width 20 nanometer along their narrowest direction. Herein, the term "optical nano antenna element" will be used to refer to antenna elements with a size below the wavelength.

In a further embodiment a size of islands 22 may be equal to a plasmon resonance size in antenna array plate 14 for light with a wavelength of light from light source. The light source may be tuned to select light with a wavelength for which islands 22 are resonant or near resonance (e.g. so that the amplitude of the response is at least half that at resonance), and/or the size of islands 22 may be set according to the light. Methods of determining a plasmon resonance length are known per se.

In the detection light path each island 22 may function as an electromagnetic dipole antenna element. An ideal dipole element may be characterized by a dipole direction, which is determined by the shape of the antenna element, e.g. the direction wherein the E-field is parallel to the longest direction of elongated islands 22, or parallel to the direction wherein the size of islands 22 is equal to a plasmon resonance length. A dipole antenna radiates light with a polarization direction parallel to the dipole direction with greater efficiency than light with a polarization direction perpendicular to the dipole direction. The field generated by a dipole element in response to an incoming field may be characterized by a polarizability tensor. Practical antenna elements may approximate an ideal dipole element, but in practice their field and polarizability tensor also depend on their shape, the material of which the antenna element is made as well as the wavelength. Depending on the size, material and wavelength used the polarizability tensor may have terms which determine the maximum scattering strength of the antenna in the different scattering directions.

The article "Plasmonic Antennas Hybridized with Dielectric Waveguides" by Felipe Bernal Arango et al illustrates that a practical optical dipole antenna element using plasmon resonance produces radiation with an intensity which, when observed in a Fourier plane, peaks at a single first location with light of a first polarization. The intensity of light produced with a second polarization perpendicular to the first polarization peaks at four second locations at the corners of a square, the first location lying in the middle of this square.

The antenna will radiate light with greater efficiency in the direction for which the antenna is in resonance. Similarly, for a given wavelength in which the antenna is resonant in a given direction the intensity of light transmitted by antenna array plate 14 has a maximum when the polarization direction wherein the E-field is perpendicular to the resonant dipole direction.

The distances between positions at which islands 22 repeat in the array are larger than the size of islands, but also smaller than the wavelength of the incident light, preferably smaller than half and more preferably smaller than a quarter of this wavelength. The array may be characterized by quadrilateral unit cells, with islands 22 at the corners of the unit cells and no further islands 22 in the unit cell. In the illustrated embodiment an array with square unit cells is used. By way of example, the length and width of the unit cells may be 150 nanometer, i.e. much less than the wavelength of 700-800 nanometer. However, it should be appreciated that arrays with different other unit cells may be used, e.g. non-square or even non-rectangular unit cells (e.g. to realize a hexagonal array), and that the cell size may be different. In an embodiment an array of 9x9 islands 22 is used, but a different number of islands may be used.

Preferably, wWhen a antenna array plate with a dipole elements is used, light with an E field polarization perpendicular to the resonant dipole direction if preferably used to illuminate antenna array plate 14 and object 190. This may be realized by means of beam splitter 12, or polarizer 100. In general a polarizing element may be used in the illuminating light path that selects a polarization is a polarization selective beam splitter 12, beam splitter 12 and antenna array plate 14 being oriented relative to each other so that a polarization direction which is maximally passed by antenna array plate 14 is parallel to the polarization direction selected by the polarizing beam splitter 12 for light through the illumination light path.

Preferably, Polarizing beam splitter 12 then passes light with polarization perpendicular to this the polarization direction in the illuminating light path is selectivelu passed through direction through the detection light path to detector 18. However, although in this embodiment an array of dipole antenna elements is used, it should be appreciated that alternatively arrays of antenna elements of other shapes may be used, which are less sensitive to polarization, so that a specific polarization need not be advantageous.

### Scanning and Fourier plane detection

Detector 18 is located in a detection plane that is perpendicular to the optical axis of objective 16, preferably at a distance from objective 18 that corresponds to the position of the Fourier plane of objective 16. As is known per se a Fourier plane lies at a distance corresponding to the focal length of objective 16. If a lens or lenses are added to the objective to form an image in a further plane, the image being an image of the plane at the distance corresponding to the focal length, such a further plane is also a Fourier plane. When this lens or these lenses are considered part of objective 18, such a further plane is said to be at a distance corresponding to the focal length of objective 16.

Detector 18 may comprise one or more light sensitive diodes or other sensors for determining local light intensity at one or more locations in the detection plane. Alternatively, detector 18 may comprise an image sensor, e.g. a CMOS or CCD or other sensor for sampling the intensity of light received from objective 16 at an array of positions in the detection plane..

Scanning mechanism 19 is configured to move object 190 and antenna array plate 14 relative to each other in one or more directions parallel with the surface of antenna array plate 14. In a further embodiment scanning mechanism 19 may also be configured to move object 190 and antenna array plate 14 in a direction perpendicular to the surface of antenna array plate 14. In the illustrated embodiment scanning mechanism 19 is configured to move object 190, but alternatively scanning mechanism 19 may be configured to move antenna array plate 14, e.g. together with other components, such as objective 16 and detector 18.

Control computer 17 is configured to cause scanning mechanism 19 to scan the relative position of object 190 and antenna array plate 14 over a one or more dimensional range of relative positions, and to receive and store detector output signals of detector 18 in association with different relative positions during the scan. In operation, detector 18 captures respective output signals when object 190 and antenna array plate 14 are located at respective different positions during the scan. The association represents the relative positions at which the stored output signals were captured. The configuration of control computer 17 to do so may be realized e.g. by means of a computer readable program to perform these function. Control computer 17 and scanning mechanism may be configured to use one or two dimensional scans. The scan is preferably a two dimensional scan, for example a two-dimensional scan that comprises a series of one dimensional scans in a first direction, at successive offsets in a second direction transverse to the first direction. When a two-dimensional scan is used, this results in detection results as function of relative position in a two dimensional grid of sample positions of object 190 relative to antenna array plate 14..

During operation, the object 190 is located closely to antenna array plate 14, e.g. at a distance that is less than a wavelength of the light. In an embodiment islands 22 may be located about 20 nanometer above the object, and the wavelength is 800 nanometer. An optical wavelength in a range of 700-800 nanometer or more generally between 400-1000 nanometer may be used for example and distances to the surface between 1 nanometer and 400 nanometer.

During operation, beam splitter 12 transmits light from light source 10 is transmitted to object 190 via objective 16 and antenna array plate 14. Near object 190 the light results in an electromagnetic field that is affected by the presence of the antenna elements and surface properties of the object (e.g. the presence of particles or structures and their location on an otherwise substantially flat surface).
radiate light to detector 18 through objective 16. The effect of the antenna elements and the object results in radiation of light towards detector 18 via objective 16. The detections produced by detector 18 detect the intensity of the radiated light as a function of relative position of object 190 and antenna array plate during the scan.

A signal processing system (e.g. control computer 17, or a separate signal processing system not shown) processes the output signals of the detector to form an image of the surface of object 190, e.g. showing particles or structures on the surface. Use of antenna array plate 14 enable this image to show near field effects of the object, which would not be visible when a conventional microscope is used.

As is known per se, distance from the object acts as a filter for part of the electromagnetic field. Conventional microscopy (without antenna array plate 14) would detect only a part of the field that contributes to radiation, which is called the far field part. The far field part corresponds to field features of which the dependence as a function position on the surface of the object have spatial frequency content below a threshold spatial frequency of the order of the wavelength of the light.

The field strength corresponding to the remaining part of the electromagnetic field at the surface of the object, which will be called the near field part, decays more strongly with distance. For example, particles of sub-wavelength size on an otherwise substantially flat surface may give rise to a near field part that is not visible at large distances. In other words, distance acts as a filter that dampens the detectable effect of the other features, which becomes substantially undetectable at large distances.

The addition of antenna array plate 14 makes such other features detectable from radiation in the far field from antenna array plate 14. The electromagnetic field at the plane of the antenna elements is due to the light from light source 10, but it is affected by both the scattering and the mere presence of object 190 and currents in the antenna elements. Individual antenna elements effectively filter and sample the reflected electromagnetic field near the object. The sampling leads to an aliasing effect that folds object dependent components from to the spatial frequency band that is detectable in the far field, an in particular in the detector plane.

### Model inversion based imaging

An image of the object surface features can be computed from detected intensities in the detector plane as a function of the relative scan position of the object surface and antenna array plate 14 relative to each other. A model of the effect of the object surface and the antenna elements can defined using Maxwell's equations, the shape of the antenna elements and material properties. In principle, the image computation involves inversion of this model, e.g. by fitting the image of the object surface in a process that minimizes the difference between the detected intensities in the object plane as a function of scan position.

A model may be used wherein the radiated field from each antenna (indexed by "o") is proportional to a coefficient p_{o} ,which depends on properties of the object, surface, incident generalized fields and on the effect of the other antenna elements, these properties can be combined in the superpolarizability tensor alphaα of these structures. The coefficients p are defined by the following equation: p_{n}= alphaα_{n} (E_{in}+sum_{m=!n}(G(r_{m},r_{n})p_{m})), where p_{n} is a generalized vector that describes the electric and magnetic multipolar moments of the antenna and scatterer "n", alphaα is a superpolarizability tensor and G is a generalized Green's function that takes into account the propagation of the fields for the multipolar expansion of generalized currents. When the positions of a unit cell at different scan positions r_{m} are considered, the coefficients p_{m} define a function E(r,r_{m})=sum_{m}G(r,r_{m})p_{m} ,where r_{m} is the position of the antenna element and scatterer "m" which would change relative position., By subdividing this set we get that the positions of the antennas are defined by r_{o} and the positions of the scatterers are defined by r_{k}, these two sets change relative to each other. Thus, the individual antenna elements effectively sample the objects at a periodic set of discrete positions r_{k}. Because the array of antenna elements has small unit cells, this form of sampling has a spatial sampling rate in each direction along the unit cell that is higher than one sample per wavelength of the incident light, and preferably significantly higher, e.g. at least twice per wavelength of visible light and more preferably higher than four samples per wavelength of the incident light. This enables high resolution sampling of near field details of the electromagnetic field.

When the distance r_{o} between antenna array plate 14 and the object r_{k} surface is small (e.g. less than one wavelength), the sampling is not subject to the full filtering effect of the distance. As a result, the samples are depend on near field properties.

By measuring the field E(r,r_{m}) at different positions r_{m} where either r_{k} or r_{o} are static it is possible to construct an overdefined system of equations where alphaα_{o} (scatterers at object 190) are unknown. These system of equations can subsequently be inversed to obtained the position and the scattering amplitude of the scatterers. An example of an inversion algorithm that retrieves position but not amplitude could be done as follows: The scattering amplitudes are recorded at the Fourier plane knowing that the position dependent radiation pattern in the absence of the scatterers should be symmetrical and maximum, in the Fourier plane, at the positions of constructive interference dictated by the path difference to the detector plane. The deviation from this state is only given by the presence of the scatterers that can change the radiation form the antennas and couple their own energy to the far field with the aid of the scattering of their near field due to the closest antennas. This perturbation is thus visualized in the Fourier plane by a change in the symmetry and intensity of the radiation pattern E(r,r_{m}. By recording this asymmetry and quantifying it we can generate a map with the asymmetry information per pixel. Since the asymmetry is related to the phase difference for the coupling to the difference antennas an integration of this difference in phase asymmetry gives us a value proportional to the total perturbation along the direction of the antennas.

The detected intensities may be used to reconstruct the near field at the location of antenna array plate. No full inversion may be needed e.g. when simplifying assumptions about the field may be used, such as an assumption that the near field is due small particles on the surface of the object, or objects of predetermined shape, and that different particles or shapes show up in non-overlapping ranges of scan positions.

However, if desired, detection of the intensity and phase of the light over one period in the plane of the detector may be used to reconstruct the relative amplitude and phase values of the near field at the antenna elements, i.e. the amplitudes multiplied by a factor and phase values with an added offset, where the factor and the offset are the same for all antenna elements. This is a matter of a Fourier transform of E(r,r_{m})(r)/alphaα(k), wherein α(k) may be determined up to a factor from a response due to a single antenna element. Interferometric measurements of an in phase and quadrature components of the light at the plane of the detector relative to a reference beam of light from light source 10 may be used.

The microscope, or a microscope system that comprises the microscope may comprise a computer programmed with a computer program to compute the relative in-phase and quadrature coefficients, or relative amplitude and phase, for the individual antennas from the detection results for a position in the scan. Furthermore, the program may be configured to assemble an image from the relative in-phase and quadrature coefficients, or relative amplitude and phase computed for different positions in the scan.

As noted, antenna element have a sampling effect, which results in aliasing, and the Fourier plane shows a Fourier transform of this sampled signal with aliasing. i.e. a Fourier transform wherein shifted copies of the Fourier transform of a continuous signal are summed. In the aliased signal at the detection plane, spectral components from higher spatial harmonic frequencies at the antenna array plate result in detectable low spatial frequency components.

In the embodiment wherein antenna array plate 14 carries a plurality of antenna arrays with mutually different unit cells, or an array with unit cells of variable size, detection results for differently sized cells may be obtained for a same scan position of object 18 relative to each of the antenna arrays, or array parts with differently sized unit cells. This provides for detection results associated with different unit cell size, i.e. for different values of the matrix coefficients of r0. In this way information about the object surface at more spatial frequencies may be obtained.

Detector 18 may comprise an image sensor, e.g. a CMOS or CCD or other sensor for sampling the intensity of light received from objective 16 at an array of positions in the plane of detector 18, i.e. in a plane perpendicular to the optical axis of objective 16 at a distance from objective that substantially equals the position of the Fourier plane of objective 16. Alternatively, detector 18 may comprise detection elements such as photodiodes at no more than e.g. two or four locations in the Fourier plane.

As noted the field strength as a function of position in the Fourier plane is proportional to (or modulated proportionally by) the effect of radiation from an individual antenna element in the Fourier plane. This modulation differs dependent on the polarization of the detected light. For a first direction of polarization, the intensity of this effect peaks at the position in the Fourier plane that corresponds to wave fronts perpendicular to the optical axis of objective 16 (this will be called the central position in the Fourier plane). For a second direction of polarization, the intensity of this effect is zero at the central position, but there are peaks adjacent the central position, at the corners of a square that has the central position at its center.

### Detection of Fourier quadrant of half-plane difference

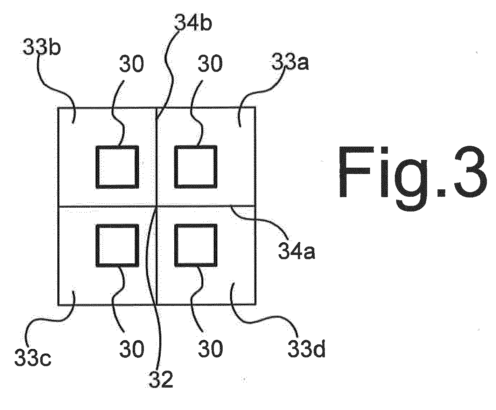

Figure 3 illustrates the detection plane. As noted, the detection plane corresponds to a Fourier plane, which means that light component s with different wave front directions at the antenna array plate 14 are mapped to different positions in the Fourier plane. Wave fronts with a wave front direction that is perpendicular to the optical axis of objective 16 are mapped to a position 32 in the detection plane. Relative to this position four quadrants 33a-d may be distinguished. The directions of the lines 34a,b separating the quadrants may be selected arbitrarily. But it is convenient to use lines parallel and perpendicular to the direction of polarization of the illumination respectively (i.e. in relation to the antenna element dipole direction if the polarization of the illumination is selected in relation to that direction). Different polarization components of the light from the detection light path produce a light intensity peak at the position 32 and at a quadruplet of positions in the different quadrants respectively. Other directions of the lines 34a,b separating the quadrants may also ensure that the quadruplet of peak positions is located in different quadrants.

In an embodiment the detector is used to detect intensity of light separately in at least two different ones of the quadrants 33a-d wherein the quadruplet of peak positions are located. The signal processing system forms images using a difference between corresponding light intensity measurements for different quadrants 33a-d, or half planes formed by pairs of quadrants. For an object with a uniform surface, any such difference will be zero. But local deviations from a uniform surface result in non-zero differences values that depend on scan position. Use of the differences makes it possible to perform more sensitive measurements. In addition, sums of the intensities may be measured for use in normalization.

In different embodiments between different types of light intensity measurements may be used. Figure 3 illustrates an embodiment wherein the detector comprises four light detectors 30 arranged at corresponding positions in different quadrants 33a-d in the plane of the detector. Light detectors 30 may be light detector diodes from example. Light detectors 30 are at symmetric locations with respect to the point 32 on which wave fronts perpendicular to the optical axis are mapped. Preferably the light detectors 30 are located at the position of the intensity peaks of the previously mentioned quadruplets. In other embodiments a light detector array, such as a CCD array may be used that extends over all positions in the quadruplet.

Each light detectors 30 measures the combined intensity at a range of locations in the detection plane, i.e. a range of wave front directions at the antenna array plate. When imaging is performed based on detection at different scan position of the object relative to the antenna array, any combination of intensities in the different quadrants may be used, such as averages over part are all of the quadrants, peak intensities etc.

The signal processing system may be configured to compute one or more difference from the output of light detector diodes 30. Alternatively, detector 18 may comprise one or more analog differential circuits, such as a differential amplifier to form difference signals representing the difference. In an embodiment differences as a function of position within the quadrants may be used, taking differences between intensities at positions that are mirror images of each other in different quadrants, with respect to mirror lines that separate the quadrants or run diagonally through the quadrants.

Differences between intensities from adjacent quadrants 33a-d may be computed, for one or more pairs of quadrants, and/or a between the sums of the signals for pairs of quadrants one opposite sides of a separating line 34a,b (either as a difference between these sums or as a sum of differences of signals for pairs of corners on different ones of the two sides), and/or a difference of the signals for diagonally opposite quadrants.

### Image computation

Image computation by the image processing system (comprising the control computer) comprises a first step wherein control computer causes the scanning mechanism to scan the position of object in two dimensions parallel to the surfaces of the object and the antenna array plate. In a second step, during the scan, the control computer records the intensities measured for different quadrants as a function of scan position, or a difference between such intensities. In a third step the image processing system uses such an intensity or difference directly to form an image of the object surface,, which may be displayed on a display screen coupled to the image processing system(the display may be part of the microscopic imaging system, but is not shown in the figures). As used herein, an "image" is any function of (scan position) that represents an estimate parameter of the object surface as function of position on the object surface: it is not limited to images that may be directly imaged using radiation of sufficiently short wavelengths.

Any one of a wide variety of methods of image formations may be used. In a simple embodiment of the third step the image processing system uses such an intensity or difference directly as pixel values in the image, which may be displayed on a display screen coupled to the image processing system(the display may be part of the microscopic imaging system, but is not shown in the figures). In a further embodiment the differences may be integrated as a function of scan position in the image, preferably in a direction in the scan plane corresponding to the direction between the detection positions in the detector plane at which the intensities used in the difference are obtained. Such simple forms of imaging may suffice if an image over a position range of a single unit cell of the array, for example to image particles in such a cell.

However, the possibilities of imaging are not limited to these simple embodiments. In another embodiment, the intensities or differences may be used to form the image in an inverse modelling process, which determines an object surface image with pixel values that correspond to position dependent values of one or more parameters of the object surface, based on a model that predicts the intensities or differences and predictions of the intensities or differences predicted dependent on the parameter values. To perform Inverse modelling the image processing system may be configured to perform a search for a set of parameter values as a function of position that minimizes a measure of difference (e.g. mean square difference) between the measured intensities or differences and the predictions.

A full electromagnetic field model may be used for this purpose. But alternatively simplified models may suffice. The electromagnetic field at the detector plane is a function Ed(r, q) of scan position q and position r in the detector plane. This function may be modeled as a product Ed=S(r)*E(r,q) of a detection plane position and polarization dependent transfer function S(r) of the objective and an object and antenna dependent function E(r,q). For a theoretical infinite two-dimensionally periodic array, wherein all unit cells of the array theoretically contribute to the field, E(r, q) is a periodic function of scan position q with periods offset by A*n, wherein A is a matrix of two vectors that span up the unit cell of the antenna array an n is a two dimensional vector with integer coefficients. The effect of a practical finite array or spot may be modeled by a convolution of the detector plane position r dependence of E(r, q) by a window function W0(r) that is a Fourier transform of a window function the plane of the array.

The window function Wo(r) also affects the dependence on scan position q. Its effect may be modeled as a type of convolution with a response function that spreads the effect at each position in a period corresponding to a unit cell of the antenna array to positions at scan positions offset by an integer number of periods from such a position. When an object feature moves into the window formed by the finite array and/or the light spot, it starts to affect the detected light intensity or difference and it stops doing so when it moves out of the window. But, in the case of a large window and at sufficient distance from the edge of the window, a movement of the object and the array relative to each other over an integer number of periods at most affects the phase factor of the field due to an object feature. The image processing system may be configured to eliminate or at least reduce the effect of this convolution on the scan position dependence, e.g. by deconvolution, inverse modeling or back propagation.

The intensity in the detection plane is proportional to the square of the absolute value. In practice the E(r, q) is a sum of a first component due to non-uniformity of the object surface and a second component that is also present without this non-uniformity. Use of the difference between the intensity in different quadrants serves to reduce the size of the second component, but in practice the second component is still be larger than the first component. In this case the part of the intensity that depends on the first component may approximately be modeled to be proportional to a product the first and second component (more precisely a sum of the first component and a complex conjugate of the second component and the second component and a complex conjugate of the first component).

The combined dependence on the position r in the detector plane and the scan position q may be modeled by writing the periodic function E(r, q) as a Fourier transform of a periodic function at the plane of the array multiplied by a non-periodic function F, where the argument of the non-periodic function is shifted in position when scan position of the object is changed. As a result, E(r,q) can be written as a sum over spatial harmonic frequencies R*m, of the Fourier transform F'(r+R*m) of F multiplied by coefficients w1(m) and a phase factor with a phase proportional to q*(r+R*m). Herein R is proportional to the inverse of A and m is a vector with integer components. In a model for scanning the array position instead of the object position the phase in phase factor lacks the term q*r. Near the central position in the Fourier plane, where the detectors are located, r is close to zero. In a model, it may be assumed as an approximation that only the non-periodic function F depends on non-uniformity of the object surface. In this case the visibility of high resolution details of the object surface is seen to be due to a aliasing effect expressed the addition of the terms R*m in the argument of F'(r+R*m). At the same time the different spatial harmonic frequencies R*m contribute to different coefficients in a Fourier series that represents the dependence of the field on the scan position q. Thus, the coefficients in a Fourier series of the detection may be used to estimate object surface properties at different spatial harmonic frequencies.

As noted the image processing system uses such an intensity or difference directly in pixels of the image of the object. In other embodiments, more complicated signal processing methods may be used, for example to eliminate the quasi periodic effect that arises due to point spread between scan positions q that differ by an integer number of periods. The image processing system may be configured to eliminate such a quasi periodic effect that arises between scan positions q that differ by an integer number of periods of the array.

For example, in one simplified model it may be modeled that the object surface is uniform except for isolated non-uniformities and that the intensities or differences are repetitions of the effect of the same non-uniformities, modulated by a window function with a width that corresponds to the width of the array or spot with which the array is illuminated. In this case, inverse modeling may be performed by taking the measured intensity or difference pattern in a region of scan positions that corresponds to a single unit cell of the array of antennas and selecting an offset of an integer number of unit cells, which, when the pattern is repeated from that offset, modulated by the window function, best predicts the measured intensities or differences as a function of scan position. A search may be made for a set of local object surface features that occupy a minimum fraction of the surface and predicts the intensities or differences to within a predetermined error.

Instead of model inversion, which may be called feedback imaging, feed forward imaging may be used, wherein the image processing system applies successive image processing operations, e.g. linear image processing operations, to an intermediate image with pixel values formed by the measured intensities or differences of different scan positions.

In one example differences between the pixel values in the intermediate image and pixel values with scan pixel positions offset by an integer number (e.g. plus and/or minus one) periods of the antenna array may be computed. Local extremes (local peaks or dips, i.e. negative local peaks) in such of difference occur when a feature moves over an edge of the window. A resulting image may be computed by shifting such local peaks by an integer number of periods of the antenna array to the corresponding center position of the window. In a further example, difference for a plurality of offsets in different directions may be computed, shifted, inverted when shift according to whether they are shifted according to entry or exit from the window and summed.

As another example a deconvolution based on the window function may be used to reduce the effect of the periodic repetition of the effect of a feature as a function of scan position when it is in the window. A Fourier transform of the intermediate image may be computed.

### Distance modulation

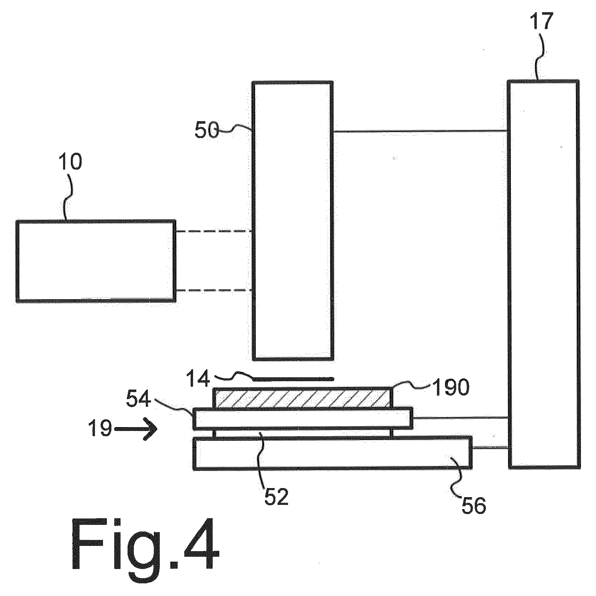

Figure 4 shows an embodiment of a microscope with a vertical movement actuator (not so scale). The microscope has an optical illumination and detection system 50, which may be implemented as shown in figure 1a-c, and an antenna array plate 14. Scanning mechanism 19 comprises a base 56, an object support 54 and an actuator 52 for moving object 190 back an forth in the direction perpendicular to the parallel surfaces of antenna array plate 14 and object 190 (referred to as the z-direction in the following. Base 56, object support 54 and actuator 56 are not shown to relative scale. Control computer 17 is configured to control actuator 52 to create an oscillating movement of object 190 in the z-direction over a distance that affects a change in the interactive effect of antenna array plate 14 and object 190 on the light. The movement distance may be one micrometer for example, or at least forty nanometer. Control computer 17 is configured to detect the amplitude of resulting oscillations in detection results from the detector in optical illumination and detection system 50, e.g. using a lock-in detector. Instead of the object, the antenna array plate may be moved to change the distance between the two, but it is preferred to move the object, as this keeps the surface closest to the objective, the antenna array plate at a fixed distance to the objective.

For the imaging it is importation that the effect of object surface features that break the uniformity of the object surface is not too small compared to the effect of the contribution of object independent effects and uniform object surface properties. Using the amount of change that results form object-array distance modulation makes the latter smaller relative to the former.

### Other embodiments

Although an embodiment with a single microscope has been shown, it should be appreciated that the measurement configuration is particularly suitable for parallelization. Instead of objective 16 and array of micro lenses may be used, each with a diameter that covers a respective window with a plurality of antenna elements. A plurality of detectors may be provided, each centered on the optical axis of a respective one of the micro-lenses. The array on antenna array plate may extend underneath all micro lenses. In this embodiment, measurements may be realized for a plurality of scan positions in parallel. Optionally, a plurality of apertures may be provided, between the micro lenses and the object (e.g. on the surface of antenna array plate), aligned with the micro lenses, so as to define the windows through which detection is performed.

In another embodiment, the position of a light spot may be scanned relative to antenna array plate 14 instead of, or in addition to scanning antenna array plate 14 and object 18 relative to each other. Scanning the light spot position relative to object 18 and antenna array plate 14 has substantially the same effect as scanning object 18 relative to antenna array plate 14 and an associated window using uniform illumination, but it may be used to obtain a higher scanning speed..

Although embodiments have been described wherein detection takes place in the Fourier plane, it should be appreciated that instead a different non-image plane may be used, at a distance from the Fourier plane. The Fourier plane is a plane wherein there is a one to one correspondence between position in the Fourier plane and wave front direction at the input of the objective, the light components with different wave front directions being mapped to their corresponding points in the Fourier plane. Thus, different wave front directions are perfectly resolved. In a detector plane that is not the image plane and lies at a distance from the Fourier plane, there is no such one to one correspondence. The components with different wave front directions are distributed over positions in the detector plane. But the locations of the peaks of the distributions of components with different wave front directions still have a one to one correspondence to the wave front directions. That is, different wave front directions are at least partially resolved. Lack of perfect resolution may deteriorate the results but need not make them useless. Distance between the Fourier plane and the detection plane merely has the effect that the spatial frequency dependence is partly blurred.

As a possible application of optical antennas, we discuss the use of nano antennas in high-resolution imaging systems. In the last years, the theme of optical high-resolution has received particular attention. Different solutions have been proposed to design such sensors: near field scanning optical microscopy (NSOM), negative refractive index or hyperbolic metamaterials. In this contribution we propose the use of arrays of plasmonic nano antennas which can overcome the limitations of the aforementioned techniques. Nano antennas, placed close enough to the object to be imaged, couple with the radiation scattered by the object. By mode-converting the high spatial frequency content into the far-field radiation, these devices enable the propagation of high-resolution details up to considerably far distances where the detector is placed. Differently from conventional NSOM techniques, where apertures on metallic tips or optical fibers are used, the array of plasmonic nano antennas facilitates the parallalelization of the scansion, by just replicating the same structure over a larger area. In terms of efficiency, exploiting the polarization characteristics and the reduced dimensions of the scatterers, array of nano antennas, in principle, are characterized by better performances compared to negative refractive index or hyperbolic metamaterials that are usually realized with extended stack of lossy plasmonic materials.

Plasmonic nano antennas are an attractive concept to attain high-efficiency and high-resolution optical sensor. If the nano antennas are placed at a close distance from the object to be imaged, in a zone where the near-field, evanescent components of the radiation are still strong enough, they can probe these evanescent components and couple their informational contribution into far-field radiative components. See N. Rotenberg, and L. Kuipers, "Mapping Nanoscale Light Fields", Nature

Photonics, December 2014.In this way even the finer details of the imaged object are accessible at the detector location. The level of resolution, that one can get, is related to the distance between the array of nano antennas and the object and the signal-to-noise ratio (SNR) of the whole system, as it is in the well established aperture-nearfield imaging. Compared to other super-resolution surfaces, such as hyperbolic metamaterials, this solution has a higher efficiency. Plasmonic nano antennas are characterized by an intrinsic lossy behavior. However, in order to reduce the losses, the polarization characteristics of the antennas can be employed. Consider, for example, a confocal system with an array of nano antennas, perpendiculary aligned with respect to the incident beam, which is almost transparent to the beam itself. In this way the losses of the metallic antennas are canceled out in the illumination path. However, in close proximity to the object, its scattered field contains both copolar and crosspolar components, with respect to the preferred polarization of the nano antennas. This means that the nano antennas are excited only by a part of the object scattered field and they re-radiate towards the detection chain of the system. In order to prove the imaging capabilities of these structures, a theoretical simulation model of the system has been developed. The plasmonic nano antennas are modelled according to the point-dipole theory. The point dipole calculation, as explained in F. Bernal Arango, A. Kwadrin, and F. A. Koenderink, "Plasmonic Antennas Hybridized with Dielectric Waveguides", ACS Nano, Vol.6, No. 11, December 2012, is performed on antennas described by electrically polarizable prolate objects. Also the objects are modelled as ideal dipoles excited by an incident plane wave (illumination beam). The array of nano antennas consists of 9 _ 9 gold dipoles in vacuum placed at 20 nm from the object; the inter-element distance is 150 nm in both transverse directions. No substrate has been considered at this initial step, but its effect can be included by means of the Green's function of a dielectric slab. The wavelength of operation considered is _ = 800 nm. Several configurations of objects have been scanned with steps of 5 nm over an area of 200 nm _ 200 nm. The aforementioned model has been coupled with a model of a conventional confocal microscope, in order to get the image of the whole optical system at the Fourier plane. At this point, a reconstruction algorithm needs to be used in order to retrieve the object information from the Fourier image. A simple model based on the computation of the differences between any of the four quadrants of the image plane has been employed together with a spatial 1D integration along the y direction. Nevertheless, more refined algorithms can be used. For example algorithms based on ptychography can be exploited to retrieve also a phase information on the object. Such algorithms are described in G. Zheng, R. Horstmeyer, and C. Yang, "Wide-field, high-resolution Fourier ptychographic microscopy", Nature Photonics, vol.7, July 2013.

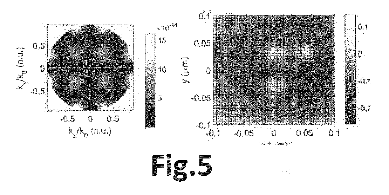

Fig. 5 shows a Fourier image at the detector of the microscope highlighting the differences in the four different corners of the image itself (left); retrieved image of three particles 50 nm apart at _ = 800 nm (right). The retrieved image has been obtained for each scanning point by subtracting the portion 4 of the Fourier image from portion 1 and integrating along the y direction. As an example, we report in figure 5 a plot of a Fourier image for a scanning point and the retrieved image for an object composed of three particles, in a rotated L configuration. The corner object is separated 50 nm and 60 nm from the other two respectively. All of them are placed at 20 nm from the array of nano antennas. The three particles emerge quite clearly once the difference between the top left corner and the bottom right corner of the Fourier image is computed for each scanning position. This example show how it is possible to image details, whose dimensions are far below the diffraction-limit for the considered wavelength of 800 nm. Moreover, as anticipated before, due to the simplicity of the structure, several different arrays can be combined onto the same surface, in order to have many parallel sensors with different properties, depending on their geometrical characteristics.

The second design employs plasmonic nano antennas for near-field sensing in optical metrology scenario. The simplicity of the structure and the reduced losses make this configuration quite attractive for metrology systems. Numerical results, showing the imaging capabilities of the plasmonic nano antennas, demonstrate the feasibility of the solution as a superresolution optical sensor.

The concept of optical antennas commonly refers to the use of arrays of nano scatterers, characterized by dielectric or plasmonic behaviors, to manipulate an incident wavefront. A typical size of these scatterers is in the order of half-wavelength. It has been demonstrated that this order of magnitude is small enough to guarantee a refined control of the scattered light in an almost point-like fashion along the surface of the array. The use of nanoantennas in high-resolution imaging systems has been discussed.

Nanoantennas, placed close enough to the object of interest, couple with the radiation scattered by the object. By mode-converting the high spatial frequency content into the far-field radiation, these devices enable the propagation of high-resolution details up to considerably far distances where the detector is placed. Differently from conventional NSOM techniques, where apertures on metallic tips or optical fibers are used, the array of plasmonic nanoantennas facilitates the parallalelization of the scan, by just replicating the same structure over a larger area. In terms of efficiency, exploiting the polarization characteristics and the reduced dimensions of the scatterers, arrays of nanoantennas, in principle, are characterized by better performance compared to negative refractive index or hyperbolic metamaterials that are usually realized with extended stacks of lossy plasmonic materials.

## Claims

1. A method of forming a microscopic image of an object, the method comprising
- illuminating the object with light through an array of nano antenna elements;
- imaging a combination of the object and the array in a detection plane wherein substantially a Fourier image of the combination is formed;
- retrieving image information for a plurality of scanning points; and
- forming the microscopic image of the object from the retrieved image information as a function of scanning point.

2. A method according to claim 1, wherein the retrieved image information is a difference between detected light intensity in respective different quadrants in the Fourier plane.

3. A method according to claim 2, wherein the retrieved image information is the difference between detected light intensity in two diagonally opposite quadrants.

4. A method according to claim 2 or 3, wherein forming the image comprises integrating the difference in a scanning direction.

5. A method according to any of the preceding claims, wherein the nano-antenna elements are dipole antenna elements.

6. A method according to claim 5, wherein the object is illuminated through the array of nano antenna elements with a polarized incident beam having a polarization direction, the nano-antenna elements being perpendicularly aligned with respect to the polarization direction.

7. A method according to any of the preceding claims, comprising combining a plurality of different arrays of nano antenna elements onto a same surface and using a plurality of parallel sensors.

8. A method of forming a microscopic image of an object, the method comprising
- illuminating the object with light through an array of antenna elements located in an antenna array plane, the object having a plane shaped surface parallel to the antenna array plane, a size of individual antenna elements in the array being smaller than half a wavelength of the light, the antenna elements being located at less than half the wavelength from a surface of the object;
- imaging a combination of the object and the array in a detection plane wherein substantially a Fourier image of the combination is formed;
- scanning in a direction parallel to the antenna array plane over a range of relative positions of the object and the array with respect to each other
- detecting a light intensity in the detector plane for a plurality of scanning positions in said range; and
- forming the microscopic image of the object from image information derived from the light intensity as a function of scanning position.

9. A method according to claim 8,
- comprising detecting light intensities at least two locations, or regions, in the detector plane at corresponding offsets to a central location in the Fourier image,
- deriving the image information by obtaining a difference between the detected light intensities at in said at least two locations, or regions.

10. A method according to 8 or 9, wherein the antenna elements are linear bodies of electrically conductive material, having a length and width, the length being greater the width, the light used in said illuminating being polarized light, with an electric field directed perpendicularly to the polarization direction of the polarized light.

11. A method according to any of the preceding claims, comprising moving the object and the array with respect to each other in a direction perpendicular to the antenna array plane, and deriving the image information from a change of the detected light intensity in the detector plane with changing distance between the object and the array.

12. A microscopic imaging system, comprising
- an object carrier;
- an array of nano antenna elements;
- a light source configured to illuminate an object on the object carrier through the array of nano antenna elements;
- an objective configured to form substantially a Fourier image of a combination of the object and the array in a detector plane;
- a detector in the detector plane;
- a signal processing system configured to form an image of an object from retrieved image information derived from the detector as a function of scanning position.

13. A microscopic imaging system according to claim 12, wherein the detector comprises respective detection elements in respective quadrants in the detector plane, wherein the signal processing system is configured to obtain the retrieved image information from a difference between light intensities detected by the respective detection elements.

14. A microscopic imaging system according to claim 13, wherein the signal processing system is configured to form the image comprises integrating the difference in a scanning direction.

15. A microscopic imaging system according to any of claim 12 to 14, wherein the nano-antenna elements are dipole antenna elements.

16. A microscopic imaging system according to claim 12, wherein light source polarized light source, the nano-antenna elements being perpendicularly aligned with respect to the polarization direction of the light source.
